(19) **Europäisches Patentamt European Patent Office Office européen des brevets**

(11) **EP 1 997 071 B1**

(12) **EUROPEAN PATENT SPECIFICATION**

(45) Date of publication and mention
of the grant of the patent:
**08.07.2009 Bulletin 2009/28**

(51) Int Cl.:
*G06T 7/00* (2006.01)     *G06T 7/40* (2006.01)

(21) Application number: **07705596.0**

(22) Date of filing: **06.02.2007**

(86) International application number:
**PCT/IB2007/000362**

(87) International publication number:
**WO 2007/107816 (27.09.2007 Gazette 2007/39)**

(54) **A METHOD FOR IDENTIFYING NON-UNIFORM AREAS ON A SURFACE**

VERFAHREN ZUM IDENTIFIZIEREN UNGLEICHFÖRMIGER BEREICHE AUF EINER OBERFLÄCHE

METHODE D'IDENTIFICATION DES ZONES NON UNIFORMES D'UNE SURFACE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.03.2006 IT MO20060093**

(43) Date of publication of application:
**03.12.2008 Bulletin 2008/49**

(73) Proprietor: **System S.p.A.**
**41042 Fiorano Modenese (MO) (IT)**

(72) Inventors:
• **STEFANI, Franco**
**41049 Sassuolo (Modena) (IT)**
• **LAMPUGNANI, Davide**
**41020 Baggiovara (Modena) (IT)**

(74) Representative: **Gotra, Stefano**
**BUGNION S.p.A.**
**Via M. Vellani, 20**
**41124 Modena (IT)**

(56) References cited:
WO-A-03/031956            DE-A1- 3 639 636
DE-A1- 19 638 065        DE-A1- 19 708 582
US-A- 5 481 619          US-A1- 2001 048 765

• TOBIAS O J ET AL: "Automatic visual inspection using the co-occurrence approach" CIRCUITS AND SYSTEMS, 1995., PROCEEDINGS., PROCEEDINGS OF THE 38TH MIDWEST SYMPOSIUM ON RIO DE JANEIRO, BRAZIL 13-16 AUG. 1995, NEW YORK, NY, USA,IEEE, US, vol. 1, 13 August 1995 (1995-08-13), pages 154-157, XP010165225 ISBN: 0-7803-2972-4
• BOUKOUVALAS C ET AL: "AUTOMATIC GRADING OF TEXTURED CERAMIC TILES" PROCEEDINGS OF THE SPIE, SPIE, BELLINGHAM, VA, US, vol. 2423, 8 February 1995 (1995-02-08), pages 248-256, XP002052097 ISSN: 0277-786X

EP 1 997 071 B1

**Description**

**Technical Field**

The invention relates to a method for identifying non-uniform areas on a surface.

The method relates particularly to the identification of chromatic nonuniformity, meaning defects or imperfections, present in an ornamental motif reproduced on a surface. Preferably, though not exclusively, the surface is the surface of a ceramic tile. Generally the defects referred to take the form of stains having edges and colouring which are more or less regular and intense.

**Background Art**

The prior art describes methods for identifying defects on a decorated surface of a ceramic tile, which consist, generally, in acquisition and digitalisation of an image of a decorated surface of the tile, in the measuring, performed one the tile image, of the values of some parameters indicating certain characteristics of the surface of the tile, in comparison of the measured values with threshold values indicating a tolerable deviation (or an intolerable one) of the corresponding parameter from a value corresponding to the absence of defects.

The images of the tiles are acquired by a series of television cameras, at least one of which is pointing perpendicular to the surface bearing the decoration on which the defects are to be identified.

The measurement of the indicative parameters and the comparison thereof with threshold values are carried out on the basis of mathematical algorithms which are different among themselves according to the analysed indicative parameter. Various indicative parameters can be constituted, for example from a mean value for grey, a mean contrast value or a percentage of similarity of surface with respect to a predetermined reference image. When the difference between the value of an indicative parameter and the corresponding threshold value exceeds a predetermined tolerance level, potential presence of a defect is signalled. The reliability of an identifying method depends on the agility to indicate that predetermined tolerance levels have been exceeded only when a real defect is identified, i.e. when the tolerance level has been rather clearly exceeded.

Some examples of known mathematical algorithms used for measuring indicative parameters and the comparison thereof with threshold values are: the "contrast" algorithm, the "Lum" algorithm and the "stain" algorithm. The contrast algorithm is based on a convolution of the obtained image by applying various filters. The resulting image is one in which all parts exhibiting a high gradient, i.e. a high contrast level with respect to the background, is evidenced with a greater intensity of grey, while all the rest is attenuated. This type of algorithm is particularly effective in the search for decoration defects realised on smooth monotone surfaces. In these conditions is possible to perform a relatively accurate comparison between the measurements made on the analysed surface and a totality of standard values corresponding to a defect-free decoration.

The Lum algorithm is based on measuring the overall luminance of the decorated surface. In substance, the algorithm is based on the search for darker or lighter pixels with respect to the non-defective tiles. These pixels can be identified by means of a comparison with upper and lower tolerance levels of the overall luminance. The algorithm is effectively useful even in the presence of decorations reproduced on a non-monotone background. On the contrary the algorithm is not effective in the presence of random decorations on the surface.

The stains algorithm is based on a local analysis of luminosity. To this end the algorithm performs a division of the image into many fragments, each of which is identified with a binary value on the basis of the highest mean grey value found among neighbouring segments. This algorithm enables agglomerations of pixels to be identified which have grey values that err with respect to the tile background. It has been found that in the presence of tiles having random decorations the accuracy of the results provided by the algorithm is relatively low due to the difficulty of correctly calibrating the threshold values corresponding to the contrast among the pixel agglomerates identified and the tile background.

The methods described, in the presence of shiny surfaces having variable colouring or bearing random decorations, do not enables a reliable identification of defects; especially if they are exhibited in the form of colour stains that are very similar to the colour of the surface, and which also present faint edges. In this case the erroneous identifications of presumed defects increase considerably as the set threshold values are made stricter. Often it is necessary to accept unsatisfactory compromise values which among other things can be defined only empirically, with considerable wasting of time, through an analysis by sampling decorated surfaces and modifying all the possible available parameters.

U.S. patent application US2001/0048765 A1 describes a product inspection system having a feature database with stored colored reference products. Feature extraction is performed during the inspection process, and the inspected products are classified according to the extracted feature data.

The aim of the present invention is to provide a method for identifying non-uniform areas on a surface which obviates the drawbacks in the known methods.

An advantage of the method is that it requires no empirical setting of significant parameters and/or threshold values.

A further advantage of the method is that it is effective on any type of surface and with any type of decoration.

Further characteristics and advantages of the invention will better emerge from the detailed description that follows of a preferred but non-exclusive embodiment of the method of the invention.

## **Disclosure of Invention**

The method comprises principal stages which will be listed and described herein below.

A stage of the method consists in defining the main geometrical and dimensional characteristics of the non-uniform areas to be identified. During this stage, the shape of the defects that might be present on the decorated surface to be examined are substantially predefined. The shape of the defects might be, with excellent approximation, assumed to be circular or elliptical, inasmuch as in general the shape derives from the formation of drops of colorant which are deposited on the decorated surface. The geometrical and dimensional characteristics of the non-uniform areas therefore comprise the diameter and/or the semiaxis of the areas.

The method further comprises a stage of defining a mathematical model which is represented by a predetermined function establishing a correspondence or correlation among elements of a bidimensional domain or sub-domain constituted by an area having dimensions and geometrical characteristics (shape characteristics) which are similar to the non-uniform areas to be identified, and corresponding elements of a bidimensional co-domain or a sub-co-domain, each of which expresses a grey-tone intensity value.

The predetermined function establishing a correspondence or correlation among elements of a bidimensional domain or subdomain, constituted by an area having geometrical dimensions and characteristics (shape) similar to those of the non-uniform areas to be identified, and corresponding elements in a bidimensional co-domain each of which expressed an intensity value for a grey tone, is a bidimensional Gauss function which can be expressed in the following way:

$$G(x,y) = \frac{1}{\delta\sqrt{2\pi}} e^{\frac{-\left((x-x_0)^2 + (y-y_0)^2\right)}{2\delta^2}} \qquad (1.1)$$

in which $\delta$ is the standard deviation (i.e. the distance with respect to the mean in which the function exhibits the flex) and $x_0$ and $y_0$ represent the coordinates of the centre of the drop. All the coordinates can be expressed in pixels with reference to the image of the surface which is acquired in a further stage of the method.

The coordinates of the centre of the drop can be considered (0,0) and in that can the equation (1.1) becomes:

$$G(x,y) = Ke^{\frac{-\left(x^2 + y^2\right)}{2\delta^2}} \qquad (1.2)$$

The parameter $K=1/\delta(2\pi)^{-1}$ in (1.2) expresses the peak value of the function itself. The parameter K can assume a value comprised between 1 and 255. It has been found the that value K=255 represents the optimal value for the function, as, for that value, the method is substantially unvarying in relation to the defect grey value.

When we assume that the non-uniform area, or defect, is circular in shape, the formula (1.2) is applied.

If, on the other hand, the defect is elliptical in shape, together with (1.2) the following system conditions exist:

$$a = \frac{D}{2}$$

$$b = \frac{D}{2C}$$

$$-a \le x \le a$$

$$-b \le y \le b \qquad\qquad (1.3)$$

$$y^2 \le b^2\left(1 - \frac{x^2}{a^2}\right)$$

$$\delta^2 = \left[x^2 + b^2\left(1 - \frac{x^2}{a^2}\right)\right]$$

where D=2a is the larger axis of the ellipse and 2b is the smaller axis thereof. The method further comprises a stage of exploration of the surface to be examined in order to acquire an image thereof. The exploration of the surface can be performed using a television camera, either colour or black-and-white. The image acquired is compared by zones or "windows" of predetermined sizes with the codomain or sub-codomain representing the mathematical model, and the differences between the two compared objects are identified. For each zone or "window" a calculation of an overall numerical index *r* is performed, which expresses the correlation value with the mathematical model. This calculation can be performed in the form of a convolution of the following type:

$$r = \sum_{i=1}^{i=N} Ii \cdot Mi \qquad (1.4)$$

(1.4) represents a non-normalized convolution, in which *Mi* are the **N** pixels of the model and *Ii* are the **N** pixels of the image present in the comparison window.

As the correlation is performed for each pixel of the research image, the positions of the window where the result acquires higher values are those in which there is the defect model to be found. To obtain stability in the algorithm measurements, i.e. in order to obtain invariance with respect to the grey value of the image and with respect to the model, the *r* calculation must be modified by normalising it:

$$r = \frac{N \cdot \sum_{i=1}^{i=N}(Ii \cdot Mi) - (\sum_{i=1}^{i=N} Ii)}{\sqrt{[N \cdot \sum_{i=1}^{i=N} I_i^2 - (\sum_{i=1}^{i=N} Ii)^2] \cdot [N \cdot \sum_{i=1}^{i=N} M_i^2 - (\sum_{i=1}^{i=N} Mi)^2]}} \qquad (1.5)$$

In this case the result *r* reaches the maximum, which is 1, when the model and defect are the same, while it becomes nil when they are not correlated.

Each overall numerical index is thus compared with a predetermined acceptability threshold value. If a numerical index exceeds the predetermined acceptability threshold value it can be deduced that the corresponding comparison zone or window exhibits a defect.

The described method offers important advantages.

Primarily, since it is based on a mathematical model, it is not necessary to perform empirical model-setting operations, as happens with known-type methods in which the model has to be set on the basis of a certain number of defects which are actually present on a sample surface.

The method is substantially independent of the type of surface and the type of decoration reproduced thereon. When there are no defects present which correspond to the preset shape characteristics, the overall numerical index *r* is very low, while it becomes significant in the opposite case. In this way the actual defects can be neatly separated from the erroneously recognised defects. Further, by setting a correct variation field of the dimensions of the defects, various defects can be contemporaneously identified, considerably increasing the effectiveness of the method with respect to known-type methods.

The method functions correctly in the presence of both colour and black-and-white images.

A further important advantage is given by the simplicity of setting the parameters, inasmuch as it is sufficient to set the minimum and maximum diameters, and/or the minimum and maximum ovality, of the defects in order to obtain high recognition effectiveness of the defects.

**Claims**

1. A method for identifying non-uniform areas on a surface, wherein it comprises following principal stages:

   definition of main geometrical and dimensional characteristics of the non-uniform areas to be identified;
   the method being **characterized by**:
   definition of a mathematical model which is represented by a predetermined function establishing a correspondence or correlation between elements of a bidimensional domain or subdomain, constituted by an area having dimensions and geometrical characteristics (shape) which are similar to those of the non-uniform areas to be identified, and corresponding elements of a bidimensional codomain or sub-codomain, each of the elements expressing a grey-tone intensity value;
   exploration of the surface for acquiring an image thereof;
   comparison of the image, by zone or window of predetermined dimensions, with the codomain or sub-codomain representing the mathematical model, and detection of differences there-between;
   calculation, for each zone or window, of an overall numerical index expressing the correlation value with the elements of a bidimensional codomain or sub-codomain, each of which expresses a grey-tone intensity value;
   comparison of each overall numerical index with a predetermined threshold acceptability value;
   signalling of any exceeding of the predetermined threshold acceptability value.

2. The method of claim 1, wherein the predetermined function establishing a correspondence or correlation between elements of a bidimensional domain or sub-domain, constituted by an area having dimensions and geometrical characteristics (shape) which are similar to the dimensions and geometrical characteristics of the non-uniform areas to be identified, and corresponding elements of a bidimensional codomain, each of which elements of a bidimensional codomain expresses a grey-tone intensity value, is a bidimensional Gauss function:

$$G(x,y) = Ke^{\frac{-\left(x^2+y^2\right)}{2\delta^2}},$$

where $\delta$ is the standard deviation, $K = 1/\delta\ (2\pi)^{-1}$ expresses the peak value of the function itself, and x and y are coordinates.

3. The method of claim 1, wherein the predetermined function establishing a correspondence or correlation between elements of a bidimensional domain or subdomain, constituted by an area having dimensions and geometrical characteristics (shape) similar to the dimensions and geometrical characteristics of the non-uniform areas to be identified, and corresponding elements of a bidimensional codomain, each of which elements expresses a grey-tone intensity value, is expressed by system conditions:

$$G(x, y) = Ke^{\frac{-(x^2+y^2)}{2\delta^2}},$$

where $\delta$ is the standard deviation, $K = 1/\delta (2\pi)^{-1}$ expresses the peak value of the function itself, and x and y are coordinates.

$$a = \frac{D}{2}$$

$$b = \frac{D}{2C}$$

$$-a \le x \le a$$

$$-b \le y \le b$$

$$y^2 \le b^2\left(1 - \frac{x^2}{a^2}\right)$$

$$\delta^2 = \left[x^2 + b^2\left(1 - \frac{x^2}{a^2}\right)\right],$$

where $\delta$ is the standard deviation, $D = 2a$ is the larger axis of the ellipse and $2b$ is the smaller axis thereof.

4. The method of claim 1, wherein the calculation, for each zone or window, of an overall numerical index r expressing the correlation value with the elements of a bidimensional codomain or a subcodomain, each of which elements expresses a grey-tone intensity value, is performed on the basis of a following normalized function:

$$r = \frac{N \cdot \sum_{i=1}^{i=N}(Ii \cdot Mi) - (\sum_{i=1}^{i=N} Ii)}{\sqrt{[N \cdot \sum_{i=1}^{i=N} I_i^2 - (\sum_{i=1}^{i=N} Ii)^2] \cdot [N \cdot \sum_{i=1}^{i=N} M_i^2 - (\sum_{i=1}^{i=N} Mi)^2]}} \quad ,$$

where $M_i$ are the N pixels of the model and $I_i$ are the N pixels of the image present in the comparison window.

5. The method of claims 2 or 3, wherein the parameter K assumes a value of between 1 and 255.

**Patentansprüche**

1. Verfahren zum Identifizieren ungleichförmiger Bereiche auf einer Oberfläche, welches die folgenden Hauptphasen enthält:

- Bestimmung der wichtigsten geometrischen und dimensionalen Eigenschaften der zu identifizierenden ungleichförmigen Bereiche; wobei das Verfahren **gekennzeichnet ist durch**:
- Festlegung eines mathematischen Modells, welches **durch** eine bestimmte Funktion dargestellt ist, die ein Verhältnis oder eine Wechselbeziehung zwischen Elementen einer zweidimensionalen Domäne oder Unterdomäne herstellt, bestehend aus einem Bereich von dimensionalen und geometrischen Eigenschaften (Form), welche ähnlich denen der zu identifizierenden ungleichförmigen Bereiche sind, und entsprechenden Elementen einer zweidimensionalen Co-Domäne oder Unter-Co-Domäne, wobei jedes der Elemente einen Wert der Intensität des Grautones ausdrückt;
- Abtasten der Oberfläche zur Aufnahme einer Abbildung derselben;
- Vergleich der Abbildung, **durch** Bereich oder Fenster von bestimmten Dimensionen, mit der das mathematische Modell darstellenden Co-Domäne oder Unter-Co-Domäne und Erfassen der Differenzen zwischen diesen;
- Berechnen für jeden Bereich oder jedes Fenster einer gesamten numerischen Kennziffer, ausdrückend den Wechselbeziehungswert mit den Elementen einer zweidimensionalen Co-Domäne oder Unter-Co-Domäne, von welchen jedes einen Wert der Intensität des Grautones ausdrückt;
- Vergleich einer jeden gesamten numerischen Kennziffer mit einem vorgegebenen Schwellenwert der Akzeptierbarkeit;
- Anzeige eines jeden Überschreitens des vorgegebenen Schwellenwertes der Akzeptierbarkeit.

2. Verfahren nach Patentanspruch 1, bei welchem die vorgegebene Funktion, die ein Verhältnis oder eine Wechselbeziehung zwischen Elementen einer zweidimensionalen Domäne oder Unterdomäne herstellt, bestehend aus einem Bereich von Abmessungen und geometrischen Eigenschaften (Form), welche ähnlich den Abmessungen und geometrischen Eigenschaften der zu identifizierenden ungleichförmigen Bereiche sind, und entsprechenden Elementen einer zweidimensionalen Co-Domäne, von welchen Elementen einer zweidimensionalen Co-Domäne jedes den Wert der Intensität eines Grautones ausdrückt, eine zweidimensionale Gauss-Funktion ist:

$$G(x,y) = Ke^{\frac{-(x^2+y^2)}{2\delta^2}}$$

wo $\delta$ die Standardabweichung ist, $K = \Lambda/\delta \, (2\Pi)^{-1}$ den Spitzenwert der Funktion selbst ausdrückt und x und y Koordinaten sind.

3. Verfahren nach Patentanspruch 1, bei welchem die vorgegebene Funktion, die ein Verhältnis oder eine Wechselbeziehung zwischen Elementen einer zweidimensionalen Domäne oder Unterdomäne herstellt, bestehend aus einem Bereich von Abmessungen und geometrischen Eigenschaften (Form), welche ähnlich den Abmessungen und geometrischen Eigenschaften der zu identifizierenden ungleichförmigen Bereiche sind, und entsprechenden Elementen einer zweidimensionalen Co-Domäne, von welchen jedes Element den Wert der Intensität eines Grautones ausdrückt, durch Systemzustände ausgedrückt ist:

$$G(x,y) = Ke^{\frac{-\left(x^2+y^2\right)}{2\delta^2}}$$

wo $\delta$ die Standardabweichung ist, K = $\Lambda/\delta$ $(2\Pi)^{-1}$ den Spitzenwert der Funktion selbst ausdrückt und x und y sind Koordinaten

$$a = \frac{D}{2}$$

$$b = \frac{D}{2C}$$

$$-a \leq x \leq a$$

$$-b \leq y \leq b$$

$$y^2 \leq b^2\left(1 - \frac{x^2}{a^2}\right)$$

$$\delta^2 = \left[x^2 + b^2\left(1 - \frac{x^2}{a^2}\right)\right]$$

wo $\delta$ die Standardabweichung ist, D = 2a ist die grössere Achse der Ellipse und 2b ist die kleinere Achse derselben.

4. Verfahren nach Patentanspruch 1, bei welchem die Berechnung für jeden Bereich oder jedes Fenster eines gesamten numerischen Index, ausdrückend den Wert der Wechselbeziehung mit den Elementen einer zweidimensionalen Co-Domäne oder einer Unter-Co-Domäne, von welchen jedes der Elemente einen Wert der Intensität des Grautones ausdrückt, auf der Basis einer folgenden normalisierten Funktion ausgeführt wird:

$$r = \frac{N \cdot \sum_{i=1}^{i=N}(Ii \cdot Mi) - (\sum_{i=1}^{i=N} Ii)}{\sqrt{[N \cdot \sum_{i=1}^{i=N} I^2 - (\sum_{i=1}^{i=N} Ii)^2] \cdot [N \cdot \sum_{i=1}^{i=N} M^2 - (\sum_{i=1}^{i=N} M)^2]}}$$

wo $M_i$ die N-Pixel des Modells und $I_i$ die N-Pixel des Bildes sind, vorhanden in dem Vergleichsfenster.

5. Verfahren nach den Patentansprüchen 2 oder 3, bei welchem der Parameter K einen Wert zwischen 1 und 255 annimmt.

**Revendications**

1. Méthode d'identification des zones non uniformes d'une surface, comprenant les phases principales suivantes:

définition des principales caractéristiques géométriques et dimensionnelles des zones non uniformes à identifier;
la méthode étant **caractérisée par**:
définition d'un modèle mathématique représenté par une fonction prédéterminée établissant une correspondance ou corrélation entre des éléments d'un domaine ou subdomaine bidimensionnel, constitué d'une zone ayant des caractéristiques dimensionnelles et géométriques (forme) similaires à celles de la zone non uniforme à identifier, et des éléments correspondants d'un codomaine ou sub-codomaine bidimensionnel, chacun des éléments exprimant une valeur d'intensité en niveaux de gris;
exploration de la surface pour en acquérir une image; comparaison de l'image, par zone ou fenêtre de dimensions prédéterminées, avec le codomaine ou sub-codomaine représentant le modèle mathématique, et détection de différences entre eux;
calcul, pour chaque zone ou fenêtre, d'un index numérique général exprimant la valeur de corrélation avec les éléments d'un codomaine ou sub-codomaine bidimensionnel, chacun exprimant une valeur d'intensité de ton de gris;
comparaison de chaque index numérique général avec une valeur de seuil d'acceptabilité prédéterminée;
signalisation de tout dépassement de la valeur de seuil d'acceptabilité prédéterminée.

2. Méthode selon la revendication 1, dans laquelle la fonction prédéterminée établissant une correspondance ou corrélation entre les éléments d'un domaine ou subdomaine bidimensionnel, constitué d'une zone ayant des dimensions et des caractéristiques géométriques (forme) similaires aux dimensions et caractéristiques géométriques des zones non uniformes à identifier, et les éléments correspondants d'un codomaine bidimensionnel, chacun desquels éléments d'un codomaine bidimensionnel exprimant une valeur d'intensité en niveaux de gris, est une fonction de Gauss bidimensionnelle:

$$G(x,y) = Ke^{\frac{-(x^2+y^2)}{2\delta^2}}$$

où $\delta$ est la déviation standard, $K=1/\delta(2\pi)^{-1}$ exprime la valeur de pic de la fonction elle-même, et x et y sont des coordonnées.

3. Méthode selon la revendication 1, dans laquelle la fonction prédéterminée établissant une correspondance ou corrélation entre des éléments d'un domaine ou subdomaine bidimensionnel, constitué d'une zone ayant des caractéristiques dimensionnelles et géométriques (forme) similaires aux caractéristiques dimensionnelles et géométriques des zone non uniformes à identifier, et des éléments correspondants d'un codomaine bidimensionnel, chacun desquels éléments exprime une valeur d'intensité en niveaux de gris, est exprimé par les conditions de système:

$$G(x,y) = Ke^{\frac{-(x^2+y^2)}{2\delta^2}}$$

où $\delta$ est la déviation standard, $K = 1/\delta(2\pi)^{-1}$ exprime la valeur de pic de la fonction elle-même, et x et y sont des coordonnées,

$$a = \frac{D}{2}$$

$$b = \frac{D}{2C}$$

$$-a \leq x \leq a$$

$$-b \leq y \leq b$$

$$y^2 \leq b^2\left(1 - \frac{x^2}{a^2}\right)$$

$$\delta^2 = \left[ x^2 + b^2\left(1 - \frac{x^2}{a^2}\right) \right]$$

où $\delta$ est la déviation standard, D=2a est l' axe le plus grand de l'ellipse et 2b est son axe le plus petit.

4. Méthode selon la revendication 1, dans laquelle le calcul, pour chaque zone ou fenêtre, d'un index numérique général exprimant la valeur de corrélation avec les éléments d'un codomaine ou sub-codomaine bidimensionnel, chacun desquels éléments exprimant une valeur d'intensité de ton de gris, est effectué sur la base d'une fonction normalisée suivante:

$$r = \frac{N \cdot \sum_{i=1}^{i=N} (Ii \cdot Mi) - (\sum_{i=1}^{i=N} Ii)}{\sqrt{[N \cdot \sum_{i=1}^{i=N} I^2 - (\sum_{i=1}^{i=N} Ii)^2] \cdot [N \cdot \sum_{i=1}^{i=N} M^2 - (\sum_{i=1}^{i=N} M)^2]}}$$

où M sont les N pixels du modèle et I sont les N pixels de l'image présente dans la fenêtre de comparaison.

5. Méthode selon les revendications 2 ou 3, dans laquelle le paramètre K assume une valeur comprise entre 1 et 255.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010048765 A1